# EUROPÄISCHE PATENTSCHRIFT

(11) **EP 3 879 076 B1**
(45) Veröffentlichungstag und Bekanntmachung des Hinweises auf die Patenterteilung: **22.11.2023**
(21) Anmeldenummer: 21160666.0
(22) Anmeldetag: 04.03.2021
(51) Int. Cl.: F01D 25/04

(54) **VERFAHREN UND SATZ VON WUCHTGEWICHTEN ZUM AUSWUCHTEN EINES ROTORS**
METHOD AND DEVICE FOR BALANCING OF A ROTOR
PROCEDE ET DISPOSITIF D'EQUILIBRAGE D'UN ROTOR

(30) Priorität: 10.03.2020 DE 102020203018
(43) Veröffentlichungstag der Anmeldung: 15.09.2021
(73) Patentinhaber: MTU Aero Engines AG, 80995 München (DE)
(72) Erfinder: Weber, Sebastian, 80995 München (DE); Feldmann, Manfred, 80995 München (DE)

(56) Entgegenhaltungen:
- EP-A2- 2 881 591
- DE-A1- 4 107 950
- US-A1- 2020 040 764
- US-B1- 6 471 453

## Beschreibung

Die Erfindung betrifft ein Verfahren und einen Satz von Wuchtgewichten zum Auswuchten eines Rotors insbesondere einer Strömungsmaschine, an welchem insbesondere rand- bzw. umfangsnah und umfangsverteilt mehrere Wuchtgewichte zum Ausgleichen einer Unwucht anordenbar sind, wobei zum Auswuchten des Rotors ein Satz von insbesondere plattenförmigen Wuchtgewichten mit einer vorbestimmten Anzahl von Gruppen von Wuchtgewichten verwendet wird.

Beispiele für Wuchtgewichte sind aus den Dokumenten US2020040764A1, US6471453B1, DE4107950A1 und EP2881591A2 bekannt.

Jeder um eine Achse rotierende starre Körper besitzt als Rotor eine Unwucht, die zu Schwingungen, Geräuschen und bei hohen Drehzahlen sogar zu einer Zerstörung des Rotors oder dessen Lagerung führen kann. Bei zu großen Unwuchten ist ein Ausgleich der Massenverteilung individuell am Rotor erforderlich. Verfahren und Wuchtgewichte bzw. Sätze von Wuchtgewichten zum Auswuchten von Rotoren sind bekannt. So sind Wuchtgewichte mit einheitlichem Gewicht und einem Bearbeitungsvolumen bekannt, welches vor dem Anordnen am Rotor bearbeitet wird, um das gewünschte Gewicht einzustellen. Sätze von Wuchtgewichten weisen häufig eine Vielzahl von Gruppen von Wuchtgewichten mit meist gleicher Grundform auf, die massebedingt größer oder kleiner bzw. länger oder kürzer und/oder dicker oder dünner ausgebildet sind. Dabei ist es oft schwierig, das Gewicht eines Wuchtgewichtes auf einen Blick oder an schwer zugänglichen Positionen eines Rotors zu erkennen. Häufig ist die Form der Wuchtgewichte an den zu wuchtenden Rotor bzw. den daran vorgesehenen Befestigungsmitteln angepasst, so dass diese relativ aufwändig herzustellen und damit teuer sind. Zudem sind solche Sätze von Wuchtgewichten nur zum Auswuchten des jeweils betreffenden Rotors geeignet.

Hiervon ausgehend ist es eine Aufgabe der vorliegenden Erfindung, ein verbessertes Verfahren zum Auswuchten eines Rotors mit einem Satz vorteilhaft gestalteter Wuchtgewichte vorzuschlagen, welcher eine vereinfachte und auch kostengünstigere Gestaltung aufweist. Dies wird erfindungsgemäß durch die Lehre der unabhängigen Ansprüche erreicht. Vorteilhafte Ausbildungen der Erfindung sind Gegenstand der Unteransprüche.

Gemäß einem ersten Aspekt wird zur Lösung der Aufgabe ein Verfahren zum Auswuchten eines Rotors insbesondere einer Strömungsmaschine, an welchem insbesondere rand- bzw. umfangsnah und umfangsverteilt mehrere Wuchtgewichte zum Ausgleichen einer Unwucht anordenbar sind, vorgeschlagen. Zum Auswuchten des Rotors wird ein Satz von insbesondere plattenförmigen Wuchtgewichten mit einer vorbestimmten Anzahl von Gruppen von Wuchtgewichten verwendet. Die Wuchtgewichte jeder Gruppe von Wuchtgewichten weisen jeweils ein gleiches dieser Gruppe zugeordnetes Gewicht auf, und eine dieser Gruppe zugeordnete Form, welche sich in der Grundform und optional zusätzlich in der Dicke der Wuchtgewichte von den Wuchtgewichten der anderen Gruppen unterscheidet. Zum Auswuchten des Rotors wird wenigstens ein Wuchtgewicht aus wenigstens einer Gruppe an einer geeigneten Position insbesondere rand- bzw. umfangsnah am Rotor angeordnet.

Das vorgeschlagene Verfahren dient zum Auswuchten eines Rotors insbesondere einer Strömungsmaschine, an welchem insbesondere rand- bzw. umfangsnah und umfangsverteilt mehrere Wuchtgewichte zum Ausgleichen einer Unwucht anordenbar sind. Als Rotor wird der sich drehende (rotierende) Teil einer Maschine oder eines Aggregates bezeichnet. Für einen geeigneten Rundlauf eines Rotors ist eine gleichmäßige Massenverteilung innerhalb des Rotorkörpers erforderlich. Bei Vorliegen einer ungleichen Massenverteilung "Unwucht" wird beim "Auswuchten" an wenigstens einer geeigneten, aus Effizienzgründen möglichst weit von der Drehachse des Rotors entfernten Position wenigstens ein Wuchtgewicht angeordnet, um die Unwucht auszugleichen und einen Rundlauf des Rotors herzustellen.

Bei dem vorgeschlagenen Verfahren wird zum Auswuchten des Rotors ein Satz von insbesondere plattenförmigen Wuchtgewichten mit einer vorbestimmten Anzahl von Gruppen von Wuchtgewichten verwendet. Die Gruppen von Wuchtgewichten enthalten jeweils gleiche Wuchtgewichte, deren Form und Gewicht übereinstimmt und der jeweiligen Gruppe zugeordnet ist, so dass das Gewicht eines Wuchtgewichts aufgrund seiner Form und damit Zuordnung zu einer Gruppe leicht erkennbar ist. Ferner sind die Wuchtgewichte insbesondere plattenförmig ausgebildet, wodurch eine einfache und kostengünstige Herstellung beispielsweise aus Blechabschnitten möglich ist. Als plattenförmig wird damit im Zusammenhang mit der vorliegenden Erfindung eine im wesentlichen flächige Gestaltung verstanden, deren beiden sich im Wesentlichen gegenüberliegenden großen Oberflächen im Wesentlichen eben ausgebildet sind. Als Form oder Grundform eines Wuchtgewichts wird im Zusammenhang mit der vorliegenden Erfindung der Umriss eines insbesondere plattenförmigen Wuchtgewichts verstanden, insbesondere die Form eines Umrisses eines Schnitts durch das Wuchtgewicht parallel zur Ebene der Plattenform oder Plattenebene. Hinsichtlich der Form und optional zusätzlich in der Dicke unterscheiden sich die Wuchtgewichte der verschiedenen Gruppen, insbesondere auch um deren Zugehörigkeit zu einer Gruppe leicht erkennen zu können.

Die Wuchtgewichte des Satzes, insbesondere alle Wuchtgewichte des Satzes und/oder alle Wuchtgewichte, die zum Auswuchten des Rotors verwendet werden, sind planparallele Platten, die jeweils nur genau eine Durchgangsöffnung, z.B. Durchgangsbohrung, zur Durchführung und Befestigung mittels eines Bolzens, wie einer Schraube und/oder eines Stiftes, umfassen.

Zum Auswuchten des Rotors wird wenigstens ein Wuchtgewicht aus wenigstens einer Gruppe an einer geeigneten Position insbesondere rand- bzw. umfangsnah am Rotor angeordnet. Die Position zum Anordnen des wenigstens einen Wuchtgewichts wird dabei in Verbindung mit den im verwendeten Satz enthaltenen Gruppen von Wuchtgewichten ermittelt. Ein Rotor kann zum Anordnen von Wuchtgewichten vorgesehene Positionen aufweisen, an welchen beispielsweise Formschließelemente oder Befestigungselemente wie Verschraubungen oder Einrichtungen zum Anordnen von Befestigungselementen wie beispielsweise Ausnehmungen oder Gewindebohrungen vorgesehen sind. Zum Anordnen von Wuchtgewichten an einem derartigen Rotor können auch entsprechend vorbestimmte Positionen beim Festlegen einer geeigneten Position berücksichtigt werden.

Das vorgeschlagene Verfahren zum Auswuchten ermöglicht ein einfaches und kostengünstiges Auswuchten eines Rotors mithilfe eines Satzes von Wuchtgewichten, welche sich hinsichtlich der Form und optional zusätzlich in der Dicke der verschiedenen Gruppen von Wuchtgewichten unterscheiden, um deren Zugehörigkeit zu einer Gruppe und damit deren Gewicht einfach erkennen zu können.

Bei einer Ausführungsform des Verfahrens zum Auswuchten eines Rotors werden zum Auswuchten des Rotors wenigstens zwei Wuchtgewichte an geeigneten, voneinander beabstandeten Positionen insbesondere rand- bzw. umfangsnah am Rotor angeordnet. Eine solche Anordnung wird üblicherweise dann gewählt, wenn kein genau passendes Wuchtgewicht verfügbar ist. Bei dieser Ausführungsform werden die wenigstens zwei Wuchtgewichte so angeordnet, dass sich die einzelnen Gewichte in gewünschter Weise ausgleichen. Dabei wird meist ein Wuchtgewicht üblicherweise umfangnah am Rotor angeordnet und diametral hierzu ein insbesondere zu diesem verschiedenes Wuchtgewicht. Bei einer beispielhaften anderen Ausführung, welche Y-Anordnung genannt wird, werden etwa diametral zwei weitere Wuchtgewichte insbesondere voneinander beabstandet am Rotor angeordnet.

Bei einer Ausführungsform des Verfahrens zum Auswuchten eines Rotors gemäß einem der vorhergehenden Ansprüche liegt die vorbestimmte Anzahl von Gruppen von Wuchtgewichten des Satzes in einem Bereich von drei bis zwölf Wuchtgewichten, insbesondere in einem Bereich von drei bis neun, insbesondere in einem Bereich von fünf bis acht und beträgt insbesondere sieben. Insbesondere beträgt die vorbestimmte Anzahl von Gruppen von Wuchtgewichten eines Satzes drei, vier, fünf, sechs, sieben, acht, neun, zehn, elf oder zwölf. Eine geeignete Anzahl von Gruppen von Wuchtgewichten des Satzes ergibt sich insbesondere abhängig von der erreichbaren Fertigungsgenauigkeit und/oder von den möglichen Positionen, an welchen Wuchtgewichte insbesondere rand- bzw. umfangsnah am Rotor befestigbar sind.

Bei einer Ausführungsform des Verfahren zum Auswuchten eines Rotors werden die Wuchtgewichte entsprechend ihrer jeweiligen Form unterschiedlich ausgerichtet am Rotor angeordnet. Bei dieser Ausführung sind die einzelnen Wuchtgewichte jeweils einer Gruppe derart ausgebildet, dass sie bei einer Anordnung am Rotor in einer anderen Lage positioniert werden können als die Wuchtgewichte anderer Gruppen. Diese unterschiedliche Positionierung kann auch in Verbindung mit am Rotor ausgebildeten Vorsprüngen, Ausnehmungen oder dergleichen erfolgen. Diese Ausführungsform des Verfahrens ist insbesondere bei Anwendungsfällen hilfreich, bei denen die Zugänglichkeit und insbesondere auch die visuelle Zugänglichkeit zu Positionen, an welchen Wuchtgewichte am Rotor angeordnet werden, eingeschränkt ist. So ermöglicht diese Ausführungsform ein einfacheres Positionieren von Wuchtgewichten und auch ein insbesondere visuelles und/oder haptisches Erkennen der Zugehörigkeit eines Wuchtgewichts zu einer (Gewichts-)Gruppe anhand dessen Gestalt.

Bei einer Ausführungsform des Verfahrens weist der Rotor eine Vielzahl von insbesondere im Randbereich umfangsverteilt angeordneten Verschraubungen auf, an welchen jeweils wenigstens ein Wuchtgewicht anordenbar ist. Dabei sind die Verschraubungen, welche üblicherweise in erster Linie eine andere Funktion am Rotor erfüllen, so ausgebildet, dass daran jeweils wenigstens ein Wuchtgewicht anordenbar ist. Auf diese Weise ist ein einfaches Anordnen von Wuchtgewichten an den Verschraubungen zum Zwecke des Auswuchtens des Rotors möglich, ohne dass weitere, zusätzliche Einrichtungen am Rotor erforderlich sind. Im Randbereich wird dabei so verstanden, dass die Verschraubungen sich in einem radial weiter außen am Rotor befindlichen Bereich angeordnet sind, da mit radial weiter außen angeordneten Wuchtgewichten eine größere Massenausgleichwirkung erreichbar ist. Beispielsweise kann der Rotor wenigstens zwei Gruppen von Verschraubungen aufweisen, welche jeweils konzentrisch verteilt und insbesondere in zwei axial beabstandeten Ebenen am Rotor angeordnet sind, und an welchen wenigstens jeweils ein Wuchtgewicht anordenbar ist. Eine Vielzahl von Möglichkeiten, Wuchtgewichte am Rotor zu befestigen vereinfacht ein präzises Auswuchten eines Rotors und ermöglicht gleichzeitig auch das Verwenden eines Satzes von Wuchtgewichten mit einer geringeren Anzahl von Gruppen von Wuchtgewichten.

In einem zweiten Aspekt wird zum Lösen der Aufgabe ein Satz von Wuchtgewichten zum Auswuchten eines Rotors insbesondere einer Strömungsmaschine vorgeschlagen, wobei das Auswuchten des Rotors insbesondere entsprechend dem vorausgehend beschriebenen Verfahren erfolgen kann. Der vorgeschlagene Satz von Wuchtgewichten weist mehrere Gruppen von insbesondere plattenförmigen Wuchtgewichten auf. Die Wuchtgewichte jeder Gruppe von Wuchtgewichten weisen dabei jeweils ein gleiches dieser Gruppe zugeordnetes Gewicht und eine dieser Gruppe zugeordnete Form auf, welche sich in der Grundform und optional zusätzlich in der Dicke der Wuchtgewichte von den Wuchtgewichten der anderen Gruppen unterscheidet.

Der vorgeschlagene Satz weist eine vorbestimmte Anzahl von Gruppen insbesondere plattenförmiger Wuchtgewichte auf. Wie bereits vorausgehend in Verbindung mit dem Verfahren beschrieben wurde enthalten die Gruppen von Wuchtgewichten jeweils gleiche Wuchtgewichte mit übereinstimmender Form und Gewicht. Auf diese Weise ist das Gewicht der Wuchtgewichte aufgrund der Form und Zuordnung zu einer Gruppe leicht erkennbar. Beispielsweise weisen die Wuchtgewichte jeweils ein Gewicht auf, das im Bereich von einem Gramm bis sechs Gramm liegt, womit insbesondere ein Feinauswuchten möglich ist. Ferner sind die Wuchtgewichte insbesondere plattenförmig ausgebildet, um eine einfache und kostengünstige Herstellung beispielsweise aus Blechabschnitten zu ermöglichen. Wie bereits ausgeführt, wird im Zusammenhang mit der Erfindung als Form eines Wuchtgewichts der Umriss eines insbesondere plattenförmigen Wuchtgewichts verstanden. Um eine Befestigung am Rotor zu ermöglichen weist ein Wuchtgewicht eine oder mehrere Durchgangsöffnungen, wie Bohrungen, auf. Ferner unterscheiden sich die Wuchtgewichte der verschiedenen Gruppen hinsichtlich ihrer Grundform und optional zusätzlich in ihrer Dicke, so dass deren Zugehörigkeit zu einer Gruppe leicht erkennbar ist.

Bei einer Ausführungsform des Satzes von Wuchtgewichten liegt die vorbestimmte Anzahl von Gruppen von Wuchtgewichten des Satzes in einem Bereich von drei bis zwölf Wuchtgewichten, insbesondere in einem Bereich von drei bis neun, insbesondere in einem Bereich von fünf bis acht und beträgt insbesondere sieben. Insbesondere beträgt die vorbestimmte Anzahl von Gruppen von Wuchtgewichten drei, vier, fünf, sechs, sieben, acht, neun, zehn, elf oder zwölf. Wie bereits zum Verfahren angegeben, ergibt sich eine geeignete Anzahl von Gruppen von Wuchtgewichten des Satzes insbesondere abhängig von der erreichbaren Fertigungsgenauigkeit und/oder den möglichen Positionen, an welchen Wuchtgewichte insbesondere rand- bzw. umfangsnah am Rotor befestigbar sind.

Bei einer Ausführungsform des Satzes von Wuchtgewichten ist die Anzahl der Gruppen von Wuchtgewichten mit unterschiedlicher Form geringer als die Gesamtzahl der Gruppen von Wuchtgewichten. Die Wuchtgewichte aus wenigstens zwei Gruppen unterscheiden sich dabei durch deren Dicke, wobei aus der unterschiedlichen Dicke aufgrund der größeren bzw. geringeren Masse ein unterschiedliches Gewicht der gleichgeformten Wuchtgewichte resultiert.

Bei einer Ausführungsform des Satzes von Wuchtgewichten weisen die Wuchtgewichte aus wenigstens zwei Gruppen die gleiche Form und eine unterschiedliche Dicke auf. Auf diese Weise haben wenigstens zwei Gruppen von Wuchtgewichten die gleiche Form, aber aufgrund der unterschiedlichen Dicke ein unterschiedliches Gewicht.

Bei einer Ausführungsform des Satzes von Wuchtgewichten stellt die Grundform wenigstens einer Gruppe von Wuchtgewichten ein Quadrat mit abgerundeten Ecken dar. Abhängig von der Größe der Radien der abgerundeten Ecken kann sich dabei die Form in ihrer äußeren Wahrnehmung deutlich voneinander unterscheiden. Beispielsweise weist ein Wuchtgewicht, dessen vier Radien jeweils einer halben Seitenlänge des zugrunde liegenden Quadrats entsprechen, eine kreisrunde Gestalt auf. Weisen die vier Radien eines Wuchtgewichts dagegen einen deutlich kleineren Radius als die halbe Seitenlänge des Quadrats auf, so hat das Wuchtgewicht eine deutlich quadratische Form.

Die Wuchtgewichte des Satzes, insbesondere alle Wuchtgewichte des Satzes und/oder alle Wuchtgewichte, die zum Auswuchten des Rotors verwendet werden, können eine vergleichswese einfache Grundform aufweisen, insbesondere eine Kreisform, eine Augenform, eine Ellipsenform und/oder eine Quadratform, insbesondere jeweils mit abgerundeten Ecken.

Die Grundform eines oder mehrerer der Wuchtgewichte, insbesondere aller Wuchtgewichte des Satzes und/oder aller Wuchtgewichte, die zum Auswuchten des Rotors verwendet werden, kann bezüglich einer Drehung um eine Achse senkrecht zur Plattenebene durch den Schwerpunkt des Wuchtgewichts, rotationssymmetrisch (Kreis) sein, oder eine zweizählige (z.B. Augenform oder Ellipse), dreizählige (z.B. gleichseitiges Dreieck) oder vierzählige (z.B. Quadrat) Symmetrie aufweisen.

Zusätzlich oder alternativ können ein oder mehrere der Wuchtgewichte, insbesondere alle Wuchtgewichte des Satzes und/oder alle Wuchtgewichte, die zum Auswuchten des Rotors verwendet werden, spiegelsymmetrisch bezüglich eine Ebene parallel zur Plattenform bzw. zur Plattenebene sein.

Vorzugsweise fallen bei einem oder mehreren der Wuchtgewichte, insbesondere bei allen Wuchtgewichten des Satzes und/oder bei allen Wuchtgewichten, die zum Auswuchten des Rotors verwendet werden, der Mittelpunkt der Durchgangsöffnung und der Schwerpunkt des Wuchtgewichtes, insbesondere jedes Wuchtgewichts des Satzes und/oder jedes Wuchtgewichts, das zum Auswuchten des Rotors verwendet wird, im zusammen oder im Wesentlichen zusammen. Beispielsweise kann die Abweichung zwischen dem Mittelpunkt und dem Schwerpunkt höchstens die zweifache Dicke, die Dicke oder die halbe Dicke des Wuchtgewichtes betragen.

Die Wuchtgewichte können damit eine vergleichsweise einfache Ausgestaltung aufweisen, die eine Fehlmontage sicher verhindern kann und eine Blindmontage an schwer zugänglichen Stellen ohne Sicht wesentlich erleichtern kann.

Der Satz von Wuchtgewichten kann insbesondere alle Wuchtgewichte umfassen, die zum Auswuchten des Rotors verwendet werden.

Die Gewichtsabstufung bzw. Gewichtsunterschiede innerhalb des Satzes von Wuchtgewichten kann ausschließlich durch unterschiedliche Grundformen der Wuchtgewichte und/oder durch unterschiedliche Dicken der Wuchtgewichte, insbesondere bei gleichem Material, erreicht sein.

Durch eine visuelle Zuordnung von Grundform und optional zusätzlich in Dicke zu Gewicht kann eine Verwechslung beim Auswuchten effektiv verhindert werden und die Montage erleichtert werden.

Ferner ist durch Variation der Größe der quadratischen Grundform bzw. wenigstens eines Radius ein Anpassen der Form der Wuchtgewichte an am Rotor ausgebildeten Vorsprüngen, Ausnehmungen oder dergleichen möglich, sodass das korrekte Anordnen eines Wuchtgewichts mithilfe der durch die Formgebung vorgegebene Ausrichtung erleichtert werden kann.

Bei einer Ausführungsform dieses Satzes von Wuchtgewichten weisen wenigstens zwei Ecken der Gruppe von Wuchtgewichten mit quadratischer Grundform und abgerundeten Ecken einen unterschiedlichen Radius auf. Weisen beispielsweise zwei jeweils gegenüberliegende Ecken einen größeren und/oder kleineren Radius auf, als die beiden anderen gegenüberliegenden Ecken, so erscheint die Form des Gewichts beispielsweise augenförmig. Ein augenförmiges Wuchtgewicht wird beispielsweise visuell und auch haptisch deutlich anders wahrgenommen, als ein kreisrundes oder quadratisches Wuchtgewicht. Auf diese Weise kann der Satz von Wuchtgewichten durch eine Variation der Radien eines Wuchtgewichts leicht sowohl visuell als auch haptisch voneinander unterscheidbare Wuchtgewichte aufweisen. Durch eine Variation der Radien der abgerundeten Ecken ist eine Vielzahl unterschiedlicher Wuchtgewichte möglich, welche ein insbesondere eng abstufbares unterschiedliches Gewicht aufweisen und zudem leicht voneinander unterscheidbar sind.

Weitere Merkmale, Vorteile und Anwendungsmöglichkeiten der Erfindung ergeben sich aus der nachfolgenden Beschreibung im Zusammenhang mit den Figuren. Es zeigen
- Fig. 1a bis 1d: eine schematische Darstellung einer beispielhaften Ausführungsform eines erfindungsgemäßen Satzes von Wuchtgewichten, und
- Fig. 2: eine schematische Darstellung eines Rotors, an welchem beispielhafte erfindungsgemäße Wuchtgewichte angeordnet sind.

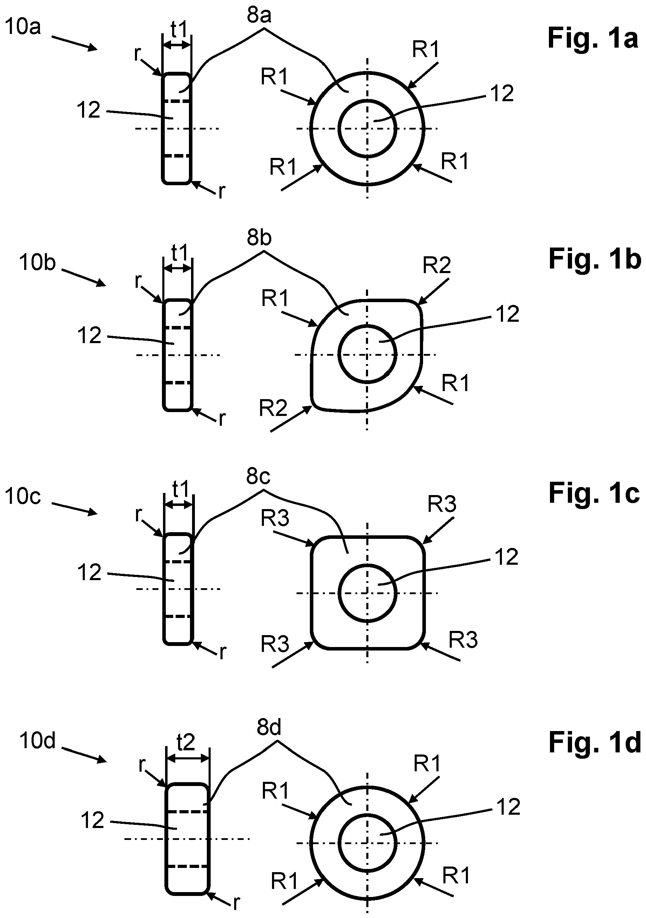

**Fig. 1a bis 1d** zeigen je eine schematische Darstellung in Seiten- und Vorderansicht einer beispielhaften Ausführungsform eines erfindungsgemäßen Satzes von Wuchtgewichten zum Auswuchten eines Rotors. Der beispielhaft dargestellte Satz ist insbesondere zum Auswuchten eines Rotors einer Strömungsmaschine insbesondere mit dem erfindungsgemäßen Verfahren geeignet. Der in den Figs. 1a bis 1d beispielhaft dargestellte Satz von Wuchtgewichten 8a bis 8d weist vier Gruppen 10a bis 10d von beispielhaft plattenförmigen Wuchtgewichten 8a, 8b, 8c und 8d auf. Die Wuchtgewichte 8a bis 8d jeder Gruppe 10a bis 10d von Wuchtgewichten weisen jeweils ein gleiches der jeweiligen Gruppe 10a bis 10d zugeordnetes Gewicht und eine der jeweiligen Gruppe 10a bis 10d zugeordnete Form auf. Dabei unterscheiden sich die Wuchtgewichte 8a bis 8d jeweils einer Gruppe 10a bis 10d in der Grundform und/oder der Dicke 11, t2 der Wuchtgewichte 8a bis 8d von den Wuchtgewichten 8a bis 8d der anderen Gruppen 10a bis 10d. Alle Wuchtgewichte 8a bis 8d des beispielhaften Satzes von Wuchtgewichten sind aus dem gleichen Werkstoff hergestellt und weisen an ihren umlaufenden Kanten einen Kantenverrundung r auf.

Das in **Fig. 1a** dargestellte Wuchtgewicht 8a einer ersten Gruppe 10a weist vier ineinander übergehende Radien R1 gleicher Größe auf, sodass das Wuchtgewicht 8a einen kreisförmigen Umriss bzw. eine kreisförmige Form aufweist. Zentral im Wuchtgewicht 8a ist eine Durchgangsöffnung 12, z.B. Durchgangsbohrung, angeordnet, die zur Befestigung des Wuchtgewichts 8a an einem Rotor dient. Das Wuchtgewicht 8a weist ferner eine Dicke t1 auf.

Das in **Fig. 1b** dargestellte Wuchtgewicht 8b einer zweiten Gruppe 10b weist eine quadratische Grundform auf, wobei jeweils zwei gegenüberliegende Radien R1 und R2 unterschiedlich groß sind. Das Wuchtgewicht 8b weist entsprechend einen augenförmigen Umriss bzw. eine augenförmige Form auf. Auch im Wuchtgewicht 8b ist eine zentrale Durchgangsöffnung 12, z.B. Durchgangsbohrung, vorgesehen, die zur Befestigung des Wuchtgewichts 8b an einem Rotor dient. Auch das Wuchtgewicht 8b weist eine Dicke t1 auf. Die Dicke t1 entspricht der Dicke t1 des in Fig. 1a dargestellten Wuchtgewichts 8a. Aufgrund des kleineren Radius R2, welcher etwa ein Drittel des Radius R1 beträgt, weist das Wuchtgewicht 8b eine größere Masse und damit ein größeres Gewicht auf, als das Wuchtgewicht 8a.

Auch das in **Fig. 1c** dargestellte Wuchtgewicht 8c einer dritten Gruppe 10c weist eine quadratische Grundform auf. Alle vier Radien R3 des Wuchtgewichts 8c sind gleich groß und betragen etwa ein Fünftel einer Seitenlänge der quadratischen Grundform. Das Wuchtgewicht 8c weist entsprechend einen quadratischen Umriss mit abgerundeten Ecken bzw. eine derartige Form auf. Auch im Wuchtgewicht 8c ist eine zentrale Durchgangsöffnung 12, z.B. Durchgangsbohrung, vorgesehen, die zur Befestigung des Wuchtgewichts 8b an einem Rotor dient. Ferner weist auch das Wuchtgewicht 8c eine Dicke t1 auf, welche der Dicke t1 der Wuchtgewichte 8a und 8b entspricht. Aufgrund der relativ zu den Radien R1 kleineren Radien R3 weist das Wuchtgewicht 8b eine größere Masse und damit ein größeres Gewicht auf, als die Wuchtgewichte 8a und 8b.

Der Umriss bzw. die Form des in **Fig. 1d** dargestellten Wuchtgewichts 8d einer vierten Gruppe 10d von Wuchtgewichten entspricht dem Umriss bzw. der Form des in Fig. 1a dargestellten Wuchtgewichts 8a. Entsprechend weist das Wuchtgewicht 8d vier ineinander übergehende Radien R1 gleicher Größe auf, sodass das Wuchtgewicht 8a einen kreisförmigen Umriss bzw. eine kreisförmige Form aufweist. Zentral im Wuchtgewicht 8a ist eine Durchgangsöffnung 12, z.B. Durchgangsbohrung, angeordnet, die zur Befestigung des Wuchtgewichts 8a an einem Rotor dient. Im Gegensatz zum Wuchtgewicht 8a weist das Wuchtgewicht 8d eine Dicke t2 auf, welche größer ist, als die Dicke t1 des Wuchtgewichts 8a. Aufgrund der größeren Dicke t2 weist das Wuchtgewicht 8d eine größere Masse und damit ein größeres Gewicht auf, als das Wuchtgewicht 8a. Da die Dicke t1 etwa ein Drittel größer ist als die Dicke t2 ist die Masse und damit auch das Gewicht des Wuchtgewichts 8d auch größer als die Masse und das Gewicht der Wuchtgewichte 8b und 8c. Entsprechend weisen die in den Figs. 1a bis 1d dargestellten Wuchtgewichte 8a bis 8d der Gruppen 10a bis 10d des beispielhaften erfindungsgemäßen Satzes von Wuchtgewichten aufeinanderfolgend ein zunehmendes Gewicht auf.

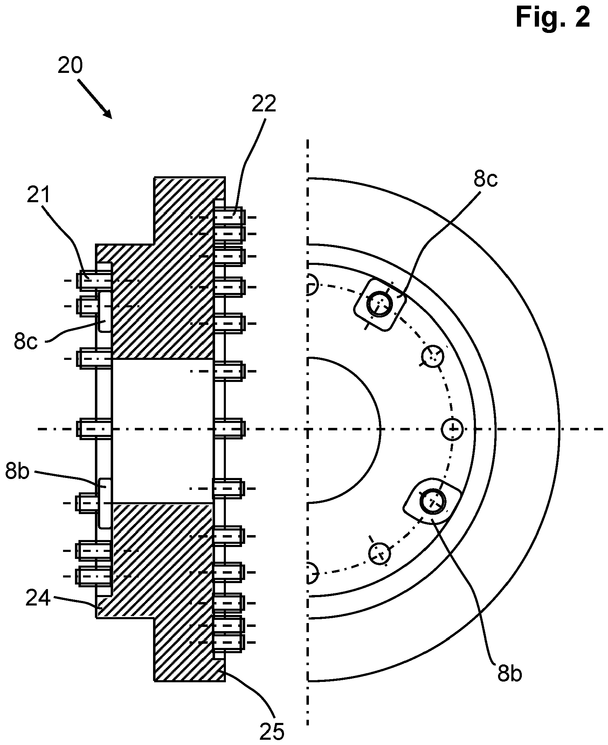

**Fig. 2** zeigt eine schematische Darstellung eines beispielhaften Rotors 20, an welchem zwei Wuchtgewichte 8b und 8c angeordnet sind. Links in Fig. 2 ist der Rotor 20 in einer Schnittdarstellung gezeigt, in der rechten Seite der Figur ist die rechte Hälfte der Vorderansicht des Rotors 20 dargestellt. Auf beiden Seiten des Rotors 20 sind gleichmäßig auf einer konzentrisch angeordneten Kreislinie umfangsverteilt eine Vielzahl von Verschraubungen 21, 22 angeordnet, an welchen insbesondere auch Wuchtgewichte zum Ausgleichen einer Unwucht umfangsverteilt am Rotor 20 anordenbar sind. Konzentrisch um die an beiden Seiten des Rotors 20 angeordneten Verschraubungen 21, 22 weist der Rotor jeweils einen radial umlaufenden Absatz 24, 25 auf. Auf die Darstellung der Muttern der Verschraubungen wurde aus Gründen der Übersichtlichkeit verzichtet. Wie in Fig. 2 erkennbar ist, ist das Wuchtgewicht 8c an einer Verschraubung 21 im oberen Bereich des Rotors 20 angeordnet. Dabei ist es so an der Verschraubung 21 ausgerichtet, dass es am Absatz 24 des Rotors 20 anliegt. Aufgrund der Größe der quadratischen Grundform des Wuchtgewichts 8c kann dieses nur in dieser Ausrichtung an der Verschraubung 21 angeordnet werden. Das augenförmige Wuchtgewicht 8b ist an einer Verschraubung 21 im unteren Bereich des Rotors 20 angeordnet.

### BEZUGSZEICHENLISTE

- 8a: Wuchtgewicht
- 8b: Wuchtgewicht
- 8c: Wuchtgewicht
- 8d: Wuchtgewicht
- 10a: Gruppe von Wuchtgewichten
- 10b: Gruppe von Wuchtgewichten
- 10c: Gruppe von Wuchtgewichten
- 10d: Gruppe von Wuchtgewichten
- 12: Durchgangsöffnung,
- 20: Rotor
- 21: Verschraubung
- 22: Verschraubung
- 24: radial umlaufender Absatz
- 25: radial umlaufender Absatz

- r: Kantenverrundung
- R1: Radius eines Wuchtgewichts
- R2: Radius eines Wuchtgewichts
- R3: Radius eines Wuchtgewichts
- t1: Dicke eines Wuchtgewichts
- t2: Dicke eines Wuchtgewichts

## Patentansprüche

1. Verfahren zum Auswuchten eines Rotors (20) einer Strömungsmaschine, an welchem umfangsverteilt mehrere Wuchtgewichte (8a, 8b, 8c, 8d) zum Ausgleichen einer Unwucht anordenbar sind, wobei zum Auswuchten des Rotors (20) ein Satz von Wuchtgewichten (8a, 8b, 8c, 8d) mit einer vorbestimmten Anzahl von Gruppen (10a, 10b, 10c, 10d) von Wuchtgewichten verwendet wird, **dadurch gekennzeichnet, dass** die Wuchtgewichte des Satzes planparallele Platten sind, die jeweils nur genau eine Durchgangsöffnung zur Durchführung und Befestigung mittels eines Bolzens umfassen, und die Wuchtgewichte (8a, 8b, 8c, 8d) jeder Gruppe (10a, 10b, 10c, 10d) von Wuchtgewichten jeweils ein gleiches dieser Gruppe (10a, 10b, 10c, 10d) zugeordnetes Gewicht und eine dieser Gruppe (10a, 10b, 10c, 10d) zugeordnete Form aufweisen, welche sich in der Grundform der Wuchtgewichte (8a, 8b, 8c, 8d) von den Wuchtgewichten (8a, 8b, 8c, 8d) der anderen Gruppen (10a, 10b, 10c, 10d) unterscheidet, wobei zum Auswuchten des Rotors (20) wenigstens ein Wuchtgewicht (8a, 8b, 8c, 8d) aus wenigstens einer Gruppe (10a, 10b, 10c, 10d) an einer geeigneten Position insbesondere rand- bzw. umfangsnah am Rotor (20) angeordnet wird.

2. Verfahren zum Auswuchten eines Rotors gemäß Anspruch 1, **dadurch gekennzeichnet, dass** zum Auswuchten des Rotors (20) wenigstens zwei Wuchtgewichte (8a, 8b, 8c, 8d) an geeigneten, voneinander beabstandeten Positionen insbesondere rand- bzw. umfangsnah am Rotor (20) angeordnet werden.

3. Verfahren zum Auswuchten eines Rotors gemäß einem der vorhergehenden Ansprüche, **dadurch gekennzeichnet, dass** die vorbestimmte Anzahl von Gruppen (10a, 10b, 10c, 10d) von Wuchtgewichten des Satzes in einem Bereich von drei bis zwölf Gruppen (10a, 10b, 10c, 10d) von Wuchtgewichten , insbesondere drei bis neun, insbesondere fünf bis acht liegt und insbesondere sieben beträgt.

4. Verfahren zum Auswuchten eines Rotors gemäß einem der vorhergehenden Ansprüche, **dadurch gekennzeichnet, dass** die Wuchtgewichte (8a, 8b, 8c, 8d) entsprechend ihrer jeweiligen Form unterschiedlich ausgerichtet am Rotor (20) angeordnet werden.

5. Verfahren zum Auswuchten eines Rotors gemäß einem der vorhergehenden Ansprüche, **dadurch gekennzeichnet, dass** der Rotor (20) eine Vielzahl von insbesondere im Randbereich umfangsverteilt angeordneten Verschraubungen (21, 22) aufweist, an welchen insbesondere jeweils wenigstens ein Wuchtgewicht (8a, 8b, 8c, 8d) anordenbar ist.

6. Verfahren zum Auswuchten eines Rotors gemäß Anspruch 5, **dadurch gekennzeichnet, dass** der Rotor (20) wenigstens zwei Gruppen von Verschraubungen (21, 22) aufweist, welche jeweils konzentrisch umfangsverteilt und insbesondere in zwei axial beabstandeten Ebenen am Rotor (20) angeordnet sind.

7. Satz von Wuchtgewichten (8a, 8b, 8c, 8d) zum Auswuchten eines Rotors (20) einer Strömungsmaschine, insbesondere mit dem Verfahren nach wenigstens einem der vorhergehenden Ansprüche, **dadurch gekennzeichnet, dass** die Wuchtgewichte des Satzes planparallele Platten sind, die jeweils nur genau eine Durchgangsöffnung zur Durchführung und Befestigung mittels eines Bolzens umfassen und der Satz mehrere Gruppen (10a, 10b, 10c, 10d) von Wuchtgewichten (8a, 8b, 8c, 8d) aufweist, wobei die Wuchtgewichte (8a, 8b, 8c, 8d) jeder Gruppe (10a, 10b, 10c, 10d) von Wuchtgewichten (8a, 8b, 8c, 8d) jeweils ein gleiches dieser Gruppe (10a, 10b, 10c, 10d) zugeordnetes Gewicht und eine dieser Gruppe (10a, 10b, 10c, 10d) zugeordnete Form aufweisen, welche sich in der Grundform der Wuchtgewichte (8a, 8b, 8c, 8d) von den Wuchtgewichten (8a, 8b, 8c, 8d) der anderen Gruppen (10a, 10b, 10c, 10d) unterscheidet.

8. Satz von Wuchtgewichten nach Anspruch 7, **dadurch gekennzeichnet, dass** die vorbestimmte Anzahl von Gruppen (10a, 10b, 10c, 10d) von Wuchtgewichten (8a, 8b, 8c, 8d) des Satzes in einem Bereich von drei bis zwölf Gruppen (10a, 10b, 10c, 10d) von Wuchtgewichten (8a, 8b, 8c, 8d), insbesondere von drei bis neun, insbesondere von fünf bis acht liegt und insbesondere sieben beträgt.

9. Satz von Wuchtgewichten nach wenigstens einem der Ansprüche 7 oder 8, **dadurch gekennzeichnet, dass** die Anzahl der Gruppen (10a, 10b, 10c, 10d) von Wuchtgewichten (8a, 8b, 8c, 8d) mit unterschiedlicher Form geringer ist als die Gesamtzahl der Gruppen (10a, 10b, 10c, 10d) von Wuchtgewichten (8a, 8b, 8c, 8d).

10. Satz von Wuchtgewichten nach wenigstens einem der Ansprüche 7 bis 9, **dadurch gekennzeichnet, dass** die Wuchtgewichte (8a, 8b, 8c, 8d) aus wenigstens zwei Gruppen (10a, 10b, 10c, 10d) von Wuchtgewichten (8a, 8b, 8c, 8d) die gleiche Form und eine unterschiedliche Dicke (11, t2) aufweisen.

11. Satz von Wuchtgewichten nach wenigstens einem der Ansprüche 7 bis 10, **dadurch gekennzeichnet, dass** die Grundform wenigstens einer Gruppe (10a, 10b, 10c, 10d) von Wuchtgewichten (8a, 8b, 8c, 8d) ein Quadrat mit abgerundeten Ecken ist.

12. Satz von Wuchtgewichten nach Anspruch 11, **dadurch gekennzeichnet, dass** wenigstens zwei Ecken der Gruppe (10a, 10b, 10c, 10d) von Wuchtgewichten (8a, 8b, 8c, 8d) mit quadratischer Grundform und abgerundeten Ecken einen unterschiedlichen Radius (R1, R2, R3) aufweisen.

13. Satz von Wuchtgewichten nach wenigstens einem der Ansprüche 7 bis 12, **dadurch gekennzeichnet, dass** die Wuchtgewichte (8a, 8b, 8c, 8d) an ihren umlaufenden Kanten eine Kantenverrundung (r) aufweisen.

## Claims

1. Method for balancing a rotor (20) of a turbomachine, on the circumference of which a plurality of balancing weights (8a, 8b, 8c, 8d) can be arranged in a distributed manner in order to redress an imbalance, a set of balancing weights (8a, 8b, 8c, 8d) having a predetermined num ber of groups (10a, 10b, 10c, 10d) of balancing weights being used for balancing the rotor (20), **characterized in that** the balancing weights of the set are plane-parallel plates, each of which comprises only one through-opening exactly for conveying and fastening by means of a bolt, and the balancing weights (8a, 8b, 8c, 8d) of each group (10a, 10b, 10c, 10d) of balancing weights each have a same weight assigned to this group (10a, 10b, 10c, 10d) and a shape assigned to this group (10a, 10b, 10c, 10d) which differs from the balancing weights (8a, 8b, 8c, 8d) of the other groups (10a, 10b, 10c, 10d) in the basic shape of the balancing weights (8a, 8b, 8c, 8d), at least one balancing weight (8a, 8b, 8c, 8d) from at least one group (10a, 10b, 10c, 10d) being arranged at a suitable position, in particular peripherally or circumferentially close to the rotor (20), in order to balance the rotor (20).

2. Method for balancing a rotor according to claim 1, **characterized in that,** in order to balance the rotor (20), at least two balancing weights (8a, 8b, 8c, 8d) are arranged at suitable positions, spaced apart from one another, in particular peripherally or circumferentially close to the rotor (20).

3. Method for balancing a rotor according to either of the preceding claims, **characterized in that** the predetermined number of groups (10a, 10b, 10c, 10d) of balancing weights of the set is in a range of three to twelve groups (10a, 10b, 10c, 10d) of balancing weights, in particular three to nine, in particular five to eight, and in particular seven.

4. Method for balancing a rotor according to any of the preceding claims, **characterized in that** the balancing weights (8a, 8b, 8c, 8d) are arranged in different orientations on the rotor (20) according to their respective shapes.

5. Method for balancing a rotor according to any of the preceding claims, **characterized in that** the rotor (20) has a plurality of screw connections (21, 22) arranged on the circumference in a distributed manner particularly in the peripheral region, at which screw connections in particular at least one balancing weight (8a, 8b, 8c, 8d) in each case can be arranged.

6. Method for balancing a rotor according to claim 5, **characterized in that** the rotor (20) has at least two groups of screw connections (21, 22), each of which is arranged concentrically on the circumference in a distributed manner and in particular in two axially spaced-apart planes on the rotor (20).

7. Set of balancing weights (8a, 8b, 8c, 8d) for balancing a rotor (20) of a turbomachine, in particular using the method according to at least one of the preceding claims, **characterized in that** the balancing weights of the set are plane-parallel plates, each of which comprises only one through-opening exactly for conveying and fastening by means of a bolt, and the set has a plurality of groups (10a, 10b, 10c, 10d) of balancing weights (8a, 8b, 8c, 8d), the balancing weights (8a, 8b, 8c, 8d) of each group (10a, 10b, 10c, 10d) of balancing weights (8a, 8b, 8c, 8d) each having a same weight assigned to this group (10a, 10b, 10c, 10d) and a shape assigned to this group (10a, 10b, 10c, 10d) which differs from the balancing weights (8a, 8b, 8c, 8d) of the other groups (10a, 10b, 10c, 10d) in the basic shape of the balancing weights (8a, 8b, 8c, 8d).

8. Set of balancing weights according to claim 7, **characterized in that** the predetermined number of groups (10a, 10b, 10c, 10d) of balancing weights (8a, 8b, 8c, 8d) of the set is in a range of three to twelve groups (10a, 10b, 10c, 10d) of balancing weights (8a, 8b, 8c, 8d), in particular three to nine, in particular five to eight, and in particular seven.

9. Set of balancing weights according to at least one of claims 7 and 8, **characterized in that** the number of groups (10a, 10b, 10c, 10d) of balancing weights (8a, 8b, 8c, 8d) having different shapes is smaller than the total number of groups (10a, 10b, 10c, 10d) of balancing weights (8a, 8b, 8c, 8d).

10. Set of balancing weights according to at least one of claims 7 to 9, **characterized in that** the balancing weights (8a, 8b, 8c, 8d) of at least two groups (10a, 10b, 10c, 10d) of balancing weights (8a, 8b, 8c, 8d) have the same shape and a different thickness (t1, t2).

11. Set of balancing weights according to at least one of claims 7 to 10, **characterized in that** the basic shape of at least one group (10a, 10b, 10c, 10d) of balancing weights (8a, 8b, 8c, 8d) is a square with rounded corners.

12. Set of balancing weights according to claim 11, **characterized in that** at least two corners of the group (10a, 10b, 10c, 10d) of balancing weights (8a, 8b, 8c, 8d) with a square basic shape and rounded corners have a different radius (R1, R2, R3).

13. Set of balancing weights according to at least one of claims 7 to 12, **characterized in that** the balancing weights (8a, 8b, 8c, 8d) have an edge rounding (r) at their circumferential edges.

## Revendications

1. Procédé permettant d'équilibrer un rotor (20) d'une turbomachine, sur lequel plusieurs poids d'équilibrage (8a, 8b, 8c, 8d) peuvent être disposés de manière à être répartis sur la circonférence pour la compensation d'un balourd, dans lequel, pour l'équilibrage du rotor (20), un jeu de poids d'équilibrage (8a, 8b, 8c, 8d) comportant un nombre prédéterminé de groupes (10a, 10b, 10c, 10d) de poids d'équilibrage est utilisé, **caractérisé en ce que** les poids d'équilibrage du jeu sont des plaques à plans parallèles qui comprennent respectivement seulement une ouverture de passage pour la traversée et la fixation au moyen d'un boulon, et les poids d'équilibrage (8a, 8b, 8c, 8d) de chaque groupe (10a, 10b, 10c, 10d) de poids d'équilibrage présentent respectivement un poids identique associé audit groupe (10a, 10b, 10c, 10d) et une forme associée audit groupe (10a, 10b, 10c, 10d), laquelle forme diffère, dans la forme de base des poids d'équilibrage (8a, 8b, 8c, 8d), des poids d'équilibrage (8a, 8b, 8c, 8d) des autres groupes (10a, 10b, 10c, 10d), dans lequel, pour l'équilibrage du rotor (20), au moins un poids d'équilibrage (8a, 8b, 8c, 8d) d'au moins un groupe (10a, 10b, 10c, 10d) est disposé au niveau du rotor (20) dans une position appropriée, en particulier à proximité du bord ou de la circonférence.

2. Procédé permettant d'équilibrer un rotor selon la revendication 1, **caractérisé en ce que,** pour l'équilibrage du rotor (20), au moins deux poids d'équilibrage (8a, 8b, 8c, 8d) sont disposés au niveau du rotor (20) dans des positions appropriées espacées l'une de l'autre, en particulier à proximité du bord ou de la circonférence.

3. Procédé permettant d'équilibrer un rotor selon l'une des revendications précédentes, **caractérisé en ce que** le nombre prédéterminé de groupes (10a, 10b, 10c, 10d) de poids d'équilibrage du jeu se situe dans une plage allant de trois à douze groupes (10a, 10b, 10c, 10d) de poids d'équilibrage, en particulier de trois à neuf, en particulier de cinq à huit, et en particulier est de sept.

4. Procédé permettant d'équilibrer un rotor selon l'une des revendications précédentes, **caractérisé en ce que** les poids d'équilibrage (8a, 8b, 8c, 8d) sont disposés au niveau du rotor (20) de manière à être orientés différemment en fonction de leur forme respective.

5. Procédé permettant d'équilibrer un rotor selon l'une des revendications précédentes, **caractérisé en ce que** le rotor (20) présente une pluralité de raccords à vis (21, 22), en particulier disposés de manière à être répartis sur la circonférence dans la région de bord, au niveau desquels en particulier respectivement au moins un poids d'équilibrage (8a, 8b, 8c, 8d) peut être disposé.

6. Procédé permettant d'équilibrer un rotor selon la revendication 5, **caractérisé en ce que** le rotor (20) présente au moins deux groupes de raccords à vis (21, 22), lesquels sont respectivement disposés au niveau du rotor (20) de manière à être répartis sur la circonférence de manière concentrique et en particulier dans deux plans axialement espacés.

7. Jeu de poids d'équilibrage (8a, 8b, 8c, 8d) permettant d'équilibrer un rotor (20) d'une turbomachine, en particulier au moyen du procédé selon au moins l'une des revendications précédentes, **caractérisé en ce que** les poids d'équilibrage du jeu sont des plaques à plans parallèles qui comprennent respectivement seulement une ouverture de passage pour la traversée et la fixation au moyen d'un boulon, et le jeu présente plusieurs groupes (10a, 10b, 10c, 10d) de poids d'équilibrage (8a, 8b, 8c, 8d), dans lequel les poids d'équilibrage (8a, 8b, 8c, 8d) de chaque groupe (10a, 10b, 10c, 10d) de poids d'équilibrage (8a, 8b, 8c, 8d) présentent respectivement un poids identique associé audit groupe (10a, 10b, 10c, 10d) et une forme associée audit groupe (10a, 10b, 10c, 10d), laquelle forme diffère, dans la forme de base des poids d'équilibrage (8a, 8b, 8c, 8d), des poids d'équilibrage (8a, 8b, 8c, 8d) des autres groupes (10a, 10b, 10c, 10d).

8. Jeu de poids d'équilibrage selon la revendication 7,
**caractérisé en ce que** le nombre prédéterminé de groupes (10a, 10b, 10c, 10d) de poids d'équilibrage (8a, 8b, 8c, 8d) du jeu se trouve dans une plage allant de trois à douze groupes (10a, 10b, 10c, 10d) de poids d'équilibrage (8a, 8b, 8c, 8d), en particulier de trois à neuf, en particulier de cinq à huit, et en particulier est de sept.

9. Jeu de poids d'équilibrage selon au moins l'une des revendications 7 ou 8, **caractérisé en ce que** le nombre de groupes (10a, 10b, 10c, 10d) de poids d'équilibrage (8a, 8b, 8c, 8d) de formes différentes est inférieur au nombre total de groupes (10a, 10b, 10c, 10d) de poids d'équilibrage (8a, 8b, 8c, 8d).

10. Jeu de poids d'équilibrage selon au moins l'une des revendications 7 à 9, **caractérisé en ce que** les poids d'équilibrage (8a, 8b, 8c, 8d) d'au moins deux groupes (10a, 10b, 10c, 10d) de poids d'équilibrage (8a, 8b, 8c, 8d) présentent la même forme et des épaisseurs différentes (t1, t2).

11. Jeu de poids d'équilibrage selon au moins l'une des revendications 7 à 10, **caractérisé en ce que** la forme de base d'au moins un groupe (10a, 10b, 10c, 10d) de poids d'équilibrage (8a, 8b, 8c, 8d) est un carré comportant des coins arrondis.

12. Jeu de poids d'équilibrage selon la revendication 11,
**caractérisé en ce qu'**au moins deux coins du groupe (10a, 10b, 10c, 10d) de poids d'équilibrage (8a, 8b, 8c, 8d) de forme de base carrée et aux coins arrondis présentent des rayons différents (R1, R2, R3).

13. Jeu de poids d'équilibrage selon au moins l'une des revendications 7 à 12, **caractérisé en ce que** les poids d'équilibrage (8a, 8b, 8c, 8d) présentent un arrondi d'arête (r) au niveau de leurs arêtes circonférentielles.
